(19) Europäisches Patentamt / European Patent Office / Office européen des brevets

(11) **EP 2 654 179 A1**

(12) **EUROPEAN PATENT APPLICATION**

(43) Date of publication:
23.10.2013 Bulletin 2013/43

(51) Int Cl.:
*H02K 1/14* *(2006.01)*    *H02K 7/18* *(2006.01)*

(21) Application number: 12164432.2

(22) Date of filing: 17.04.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Siemens Aktiengesellschaft
80333 München (DE)

(72) Inventor: Madsen, Anders Jakob
7800 Skive (DK)

(54) **Segmented stator of an electrical machine**

(57) Stator (8) for an electrical machine, in particular for a generator of a wind turbine, comprising a plurality of interconnected stator segments (9) forming a generally annular structure, each stator segment (9) including a base member (yoke) and a plurality of radial protrusions (11) projecting radial outwards from the base member (yoke) and adapted to support conductive windings, wherein two adjacent stator segments (9) comprise corresponding connecting portions (13) that positively engage each other, wherein each connecting portion (13) comprises at least one radial element (14) projecting radial outwards so that one of the radial protrusions (11) of the stator (8) is formed by alternating radial elements (14).

## FIG 3

## Description

The invention relates to a stator for an electrical machine, in particular for a generator of a wind turbine, comprising a plurality of interconnected stator segments forming a generally annular structure, each stator segment including a base member and a plurality of radial protrusions projecting radial outwards from the base member and adapted to support conductive windings.

Nowadays, electrical machines, in particular generators of wind turbines, may have significant sizes with diameters of several meters. As it is difficult to manufacture components of this size as one piece by a process of moulding, it is common to assemble structural member like stators, from smaller components. The smaller components that are easy to manufacture from a mould.

The annular structure of a conventional stator, in particular for a generator of a wind turbine, is usually built from a plurality of stator segments connected by bolts. Each stator segment includes a base member that extends over a section of the annular structure of the rotor. A plurality of radial protrusions project radial outwards from the base member. The radial protrusions are adapted to support conductive windings that are arranged in slots or gaps defined by consecutive radial protrusions.

It is a challenging task to provide the stator assembled from interconnected stator segments with a sufficient mechanical stability so that damages of the windings due to mechanical stress, in particular vibrations, may be avoided.

It is an object of the present invention to provide a stator with improved mechanical stability, in particular to minimise vibration induced damages of the windings.

According to the invention, this object is achieved with stator of the aforementioned type, wherein at least two adjacent stator segments comprise corresponding connecting portions that positively engage each other, wherein each connecting portion comprises at least one radial element projecting radial outwards so that one of the radial protrusions of the stator is formed by the radial elements of the engaged connecting portions.

Hence, the connecting portions of the stator segments are provided with mating structures that positively engage each other for increased stability. Each of the adjacent connecting portions comprises at least one radial element so that the radial protrusion located at the joint is formed by the arrangement of radial elements located on different stator segments when the stator is assembled. Each radial element has a width that corresponds to the width of each of the radial protrusions arranged around the circumference of the stator at regular intervals.

As the radial elements forming the radial protrusion located adjacent the coupling sections of interconnected stator segments comprise the width of the other radial protrusions, the resilience of the radial elements, in particular the resilience to vibrations, is increased. Hence, stator windings accommodated in gaps adjacent to the radial protrusion formed by the radial elements of the connecting portions are mechanically well protected and damages may be avoided.

In one preferred embodiment of the invention, each connecting portion comprises a plurality of radial elements. The radial elements of each connecting portion are displaced with respect to each other in an axial direction. The radial elements are displaced in a manner, so that a substantial continuous radial protrusion is formed at the joint when the connecting portions positively engage each other.

Preferably, the connecting portions include correspondingly shaped tooth- profiles. In particular, the connecting portions may be provided with mating structures that positively engage each other so as to provide a form fit stabilising the interconnected stator segments in at least the axial direction. Hence, the stability of the stator comprising the arrangement of interconnected stator segments is increased.

According to a preferred embodiment of the invention, the radial elements are spaced apart from each other in the axial direction so that at least one air duct is provided between them when the connecting portions positively engage each other. During operation of the stator, a gaseous cooling medium, in particular air, may flow through the air duct to improve the cooling of the stator.

Each stator segment may be made from a plurality of laminations. The laminations reduce hysteresis and eddy current losses and thus also help to reduce heating-up of the stator during operation of the electrical machine.

In particular, the laminations may contain aluminium so as to reduce weight and allow for construction of large stators suitable for being used in generators of wind turbines.

Preferably, the stator is used in an electrical machine configured as a motor or generator.

The invention further relates to a wind turbine with a generator comprising a rotor rotatably arranged relative to the stator as described herein before. In particular, the radial protrusion located at the joint of adjacent stator segments is formed by radial elements located on different stator segments. The stator is assembled from the stator segments having connecting portion that positively engage each other. Hence the stator features increased mechanical stability, in particular an increased resilience to vibrations, so that the conductive windings and insulation accommodated within the gaps intermediate the radial protrusions are well protected.

Increased mechanical stability also allows for a construction of larger stators. The stator may be provided with large gaps accommodating large coils of conductive windings. This in turn allows for the use of inexpensive conductive materials for the windings, in particular of aluminium, as the reduced electrical conductivity may be compensated by arranging large coils of windings within the gaps intermediate the radial protrusions.

In one preferred embodiment of the invention, the wind turbine comprises a rotor hub mounting a plurality of rotor blades that is firmly connected to the rotor. The wind turbine is thus directly driven, i.e. does not comprise a transmission or gear box arranged to convert mechanical torque exerted upon the rotor. Directly driven wind turbines feature a simple configuration that is robust so that demand for maintenance is reduced. The wind turbine is particularly suited for being set up at remote locations like offshore wind parks.

In the following, the invention is described in more detail with reference to figures, wherein

fig. 1     shows a section of the stator according to prior art in a perspective view;

fig. 2     shows a section of the stator according to a first embodiment in perspective view;

fig. 3     shows a top view of two interconnected stator segments according to the first embodiment of the invention;

fig. 4     shows a section of the stator according to a second embodiment in perspective view;

fig. 5     shows a top view of two interconnected stator segments according to the second embodiment of the invention.

Like elements are indicated in all figures with like reference symbols.

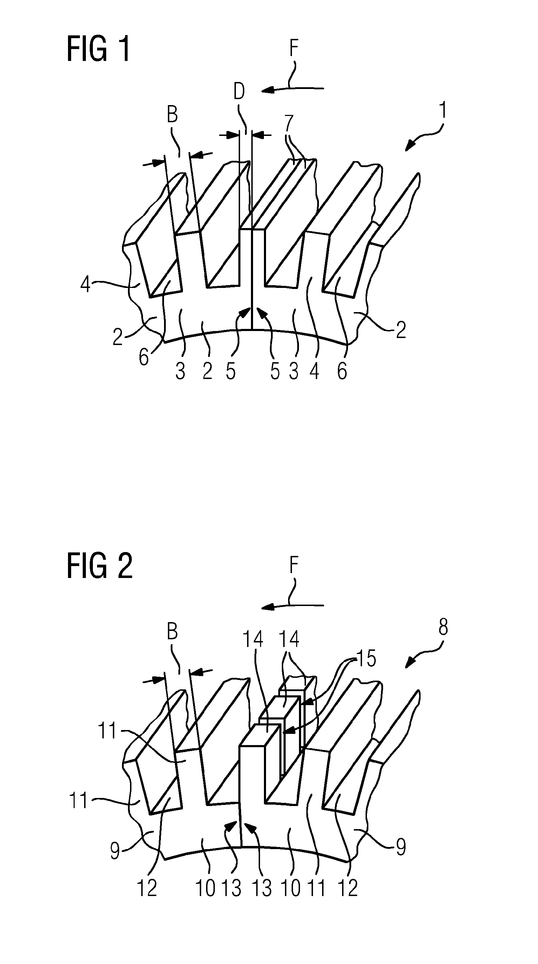

Fig. 1 shows a section of a stator 1 for an electrical machine according to prior art in a schematic perspective view. The stator 1 is assembled from stator segments 2, wherein each stator segment 2 extends over a section of the annular structure of the stator 1. Each stator segment 2 comprises a plurality of radial protrusions 4 extending from a base member 3. The radial protrusions 4 are distributed around the circumference of the stator 1 at regular intervals.

Each radial protrusion 4 has a first width B. The stator segments 2 are connected to each other via connecting portions 5 of planar shape that abut on each other in the circumferential direction when assembled. The arrangement of stator segments 2 is secured by a plurality of bolts (not illustrated). The arrangement of radial protrusions 4 provides a plurality of gaps 6 arranged around the circumference of the stator 1. Coils of conductive windings (not illustrated) are arranged in the gaps 6.

The working principle of electrical engines comprising stators of this kind, in particular generators or motors, is well known. Further explanation is thus omitted.

The radial protrusion 4 located adjacent to the connecting portions 5 is formed by radial elements 7. The radial elements 7 according to prior art have substantially the same shape as the radial protrusions 7 but exhibit a reduced second width D that equals one half of the first width B.

As the radial protrusion 4 located at the joints between different stator segments 2 constitutes of two radial elements 7 of reduced width B, mechanical failure, in particular due to vibrations, may occur. In particular, the conductive windings accommodated in the gaps 6 adjacent to the connecting portions 5 are prone to damage induced by vibrations.

A force F exerted on the stator 1 during operation of the electric machine is indicated by an arrow. The force F acts in a circumferential direction, so that bending of the radial element 7 may occur.

According to prior art, the radial protrusion 4 located adjacent to the connecting portions 5 is formed by two radial elements 7 wherein each element 7 extends over the whole axial length L of the stator 1. The connecting portions 5 have a substantial planar shape and abut on each other when the stator segments 2 are connected to each other.

Fig. 2 shows a first embodiment of a stator 8 according to the invention. The stator 8 comprises a plurality of interconnected stator segments 9. Each stator segment 9 exhibits a base member 10 and a plurality of radial protrusions 11 extending radial outwards from the base member 10. The arrangement of radial protrusions 11 defines a plurality of gaps 12 distributed around the circumference of the stator 8 at regular intervals. Conductive windings are arranged within the gaps 12.

The stator segments 9 are connected via connecting portions 13 that comprise correspondingly shaped tooth-profiles. The connecting portions 13 positively engage each other when the stator 8 is assembled. Each connecting portions 13 comprises a plurality of radial elements 14 displaced from each other in the axial direction. The arrangement of radial elements 14 provides the radial protrusion 11 located adjacent to the connecting portions 13 when the stator 8 is assembled.

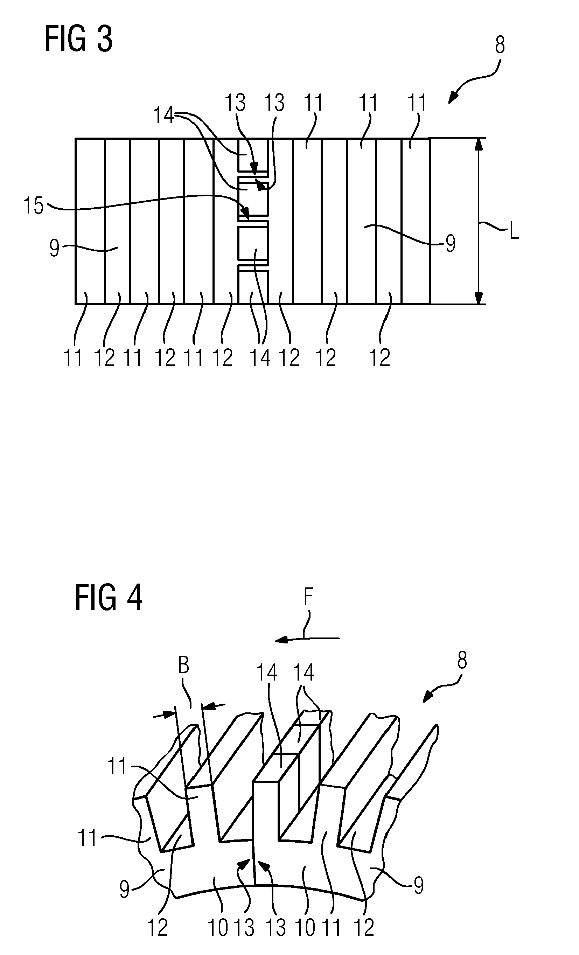

As best illustrated in the perspective view of fig. 3, the radial elements 14 of the stator 8 according to the first embodiment of the invention are distributed over an axial length L of the stator 8 and spaced away from each other so as to provide air ducts 15 or cooling purposes.

The stator segment 9 is made from a plurality of laminations containing aluminium.

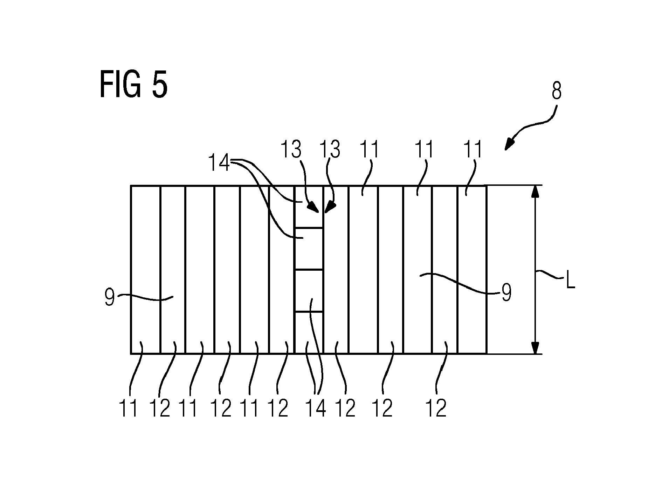

Fig. 4 and 5 illustrate an alternative second embodiment of the stator 8. Essential features of the first and second embodiment correspond to each other, In particular, the stator 8 of the second embodiment comprises stator segments 9 that are connected to each other via connecting portions 13 exhibiting tooth-profiles as already described herein before with reference to fig. 2 and 3.

However, the radial elements 14 of the second embodiment fit snugly together so as to form a continuous structure without intermediate air ducts 15 or gaps when the connecting portions 13 engage each other.

Fig. 4 shows a section of the stator 8 of the second embodiment of the invention in a perspective view. The radial elements 14 located on the connecting portions 13 of different stator segments 9 abut on each other when the stator segments 9 are interconnected. The stator segments 9 may be secured to each other by suitable mounting means, in particular bolts.

Fig. 5 shows the stator 8 of the second embodiment in a top view. The radial elements 14 are distributed over the axial length L of the stator 8 at regular intervals. When the connecting portions 13 positively engage each other, a continuous structure with first width W1 is formed at the joint of interconnected stator segments 9.

The configurations of the stator 8 depicted in figures 2 to 5 provide increased mechanical stability as can be seen as follows: As indicated in fig. 1, the radial protrusion 4 according to prior art has a reduced second width D. Thus, the radial protrusion 4 according to prior art may be seen as a simple beam with width D and length L. Thus, one of the area moments of inertia $J_{12}$ computes as

$$J_{xx} = \frac{D^3 L}{12}.$$

Hence, increasing D will result in a beam with increased resilience.

As best illustrated in fig. 2 and 4, the radial elements 14 according to the invention comprise the same first width B as the radial protrusion 11. The mechanical stability is increased and damages, in particular damages to the conductive windings accommodated in gaps 12 adjacent to the connecting portions 13, may be avoided. Increase of the mechanical stability allows for a construction of large stators suitable for being used in generators of wind turbines.

In particular, a bending of the radial elements 14 in the circumferential direction by the electromechanical force F may be avoided. The resilience of the radial elements 14 is increased, so that abrasion of the windings accommodated in the gaps 12 located close to the joints between the different stator segments 9 may be countered.

Moreover, the increase of mechanical stability allows for using inexpensive alternative materials for the conductive windings. Conventionally, copper is used for these purposes. As mechanical stability of the stator 8 is increased, the gaps 12 may be provided with an increased depth. Thus, aluminium may be used as a material for the conductive windings as the increased electric resistance may be compensated by larger coils of windings accommodated in the gaps 12 provided between the radial protrusions 11.

Although the present invention has been described in detail with reference to the preferred embodiment, the present invention is not limited by the disclosed examples from which the skilled person is able to derive other variations without departing from the scope of the invention.

## Claims

1. Stator (8) for an electrical machine, in particular for a generator of a wind turbine, comprising a plurality of interconnected stator segments (9) forming a generally annular structure, each stator segment (9) including a base member (10) and a plurality of radial protrusions (11) projecting radial outwards from the base member (10) and adapted to support conductive windings, **characterized in that** at least two adjacent stator segments (9) comprise corresponding connecting portions (13) that positively engage each other, wherein each connecting portion (13) comprises at least one radial element (14) projecting radial outwards so that one of the radial protrusions (11) of the stator (8) is formed by the radial elements (14) of the engaged connecting portions (13).

2. Stator (8) according to claim 1, **characterized in that** each connecting portion (13) comprises a plurality of radial elements (14).

3. Stator (8) according to claim 1 or 2, **characterized in that** the connecting portions include correspondingly shaped tooth-profiles.

4. Stator (8) according to one of the previous claims, **characterized in that** the radial elements (14) of the engaged connecting portions (13) are spaced apart from each other in an axial direction so as to provide at least one air duct (15).

5. Stator (8) according to one of the previous claims, **characterized in that** each stator segment (9) is made from a plurality of laminations, in particular laminations containing aluminium.

6. Wind turbine with a generator comprising a rotor rotatably arranged relative to a stator (8) according to one of the previous claims.

7. Wind turbine according to claim 7, **characterized in that** the rotor is firmly connected to a rotor hub mounting a plurality of rotor blades.

# FIG 1

# FIG 2

FIG 3

FIG 4

FIG 5

**EP 2 654 179 A1**

Europäisches
Patentamt

European
Patent Office

Office européen
des brevets

**EUROPEAN SEARCH REPORT**

Application Number

EP 12 16 4432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/073591 A1 (ABB RESEARCH LTD [CH]; SHEN JIN [DE]; MECHLER GUENTHER [DE]; MANTERE J) 4 September 2003 (2003-09-04) | 1-3 | INV.<br>H02K1/14<br>H02K7/18 |
| Y | * page 6, paragraph 3 - page 12, paragraph 1; figures 1,3-6,9 *<br>----- | 6,7 | |
| Y | WO 2011/006810 A2 (SIEMENS AG [DE]; JUNGE MARTIN [DE]; JOECKEL ANDREAS [DE]) 20 January 2011 (2011-01-20) * abstract; figures 3-7 *<br>----- | 6,7 | |
| X | DE 10 2008 063783 A1 (WIND DIRECT GMBH [DE]) 24 June 2010 (2010-06-24) * abstract; figure 4 *<br>----- | 1-3,6,7 | |
| X | WO 92/10020 A1 (BOSCH GMBH ROBERT [DE]) 11 June 1992 (1992-06-11) * page 4, paragraph 9 - page 8, paragraph 1; figures 2-6 *<br>----- | 1-3 | |
| X | DE 42 13 377 A1 (SWF AUTO ELECTRIC GMBH [DE]) 28 October 1993 (1993-10-28) * column 4, line 21 - column 5, line 63; figures 6-8 *<br>----- | 1-3 | TECHNICAL FIELDS SEARCHED (IPC)<br><br>H02K |
| X | GB 2 095 044 A (THYSSEN INDUSTRIE) 22 September 1982 (1982-09-22) * the whole document *<br>----- | 1-3 | |

The present search report has been drawn up for all claims

| Place of search | Date of completion of the search | Examiner |
|---|---|---|
| Munich | 18 September 2012 | von Rauch, Marianne |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**

EP 12 16 4432

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2012

| Patent document cited in search report | | Publication date | Patent family member(s) | | Publication date |
|---|---|---|---|---|---|
| WO 03073591 | A1 | 04-09-2003 | NONE | | |
| WO 2011006810 | A2 | 20-01-2011 | CA | 2767861 A1 | 20-01-2011 |
| | | | CN | 102474166 A | 23-05-2012 |
| | | | DE | 102009032885 A1 | 03-02-2011 |
| | | | EP | 2454803 A2 | 23-05-2012 |
| | | | US | 2012112466 A1 | 10-05-2012 |
| | | | WO | 2011006810 A2 | 20-01-2011 |
| DE 102008063783 | A1 | 24-06-2010 | AU | 2009328799 A1 | 28-07-2011 |
| | | | CN | 102257270 A | 23-11-2011 |
| | | | DE | 102008063783 A1 | 24-06-2010 |
| | | | EP | 2376776 A2 | 19-10-2011 |
| | | | KR | 20110102464 A | 16-09-2011 |
| | | | US | 2011298330 A1 | 08-12-2011 |
| | | | WO | 2010069300 A2 | 24-06-2010 |
| WO 9210020 | A1 | 11-06-1992 | BR | 9107098 A | 13-10-1993 |
| | | | DE | 4037953 A1 | 04-06-1992 |
| | | | EP | 0559665 A1 | 15-09-1993 |
| | | | ES | 2076555 T3 | 01-11-1995 |
| | | | JP | 3264329 B2 | 11-03-2002 |
| | | | JP | H06502983 A | 31-03-1994 |
| | | | US | 5402028 A | 28-03-1995 |
| | | | WO | 9210020 A1 | 11-06-1992 |
| DE 4213377 | A1 | 28-10-1993 | NONE | | |
| GB 2095044 | A | 22-09-1982 | DE | 3110339 A1 | 30-09-1982 |
| | | | FR | 2502413 A1 | 24-09-1982 |
| | | | GB | 2095044 A | 22-09-1982 |
| | | | JP | 1443991 C | 08-06-1988 |
| | | | JP | 57202868 A | 11-12-1982 |
| | | | JP | 62051071 B | 28-10-1987 |
| | | | SU | 1299525 A3 | 23-03-1987 |
| | | | US | 4665329 A | 12-05-1987 |
| | | | US | 4728382 A | 01-03-1988 |

EPO FORM P0459

For more details about this annex : see Official Journal of the European Patent Office, No. 12/82